# EUROPEAN PATENT APPLICATION

(11) **EP 3 396 829 A1**
(43) Date of publication of application: **31.10.2018**
(21) Application number: 16878533.5
(22) Date of filing: 15.12.2016
(51) Int. Cl.: H02K 37/14

(54) **MOTOR DEVICE AND POINTER-TYPE DISPLAY DEVICE**

(30) Priority: 21.12.2015 JP 2015248445
(71) Applicant: Nidec Sankyo Corporation, Suwa-gun, Nagano 393-8511 (JP)
(72) Inventor: YOKOYAMA, Masaki, Suwa-gun Nagano 393-8511 (JP)
(74) Representative: Emde, Eric
(86) International application number: PCT/JP2016/087343
(87) International publication number: WO 2017/110642

(57) **Abstract**

Proposed are a motor device in which vibrations in a stator core can be suppressed, and a pointer-type display device. In the case of this motor device, tip parts 230 of first protrusion sections 23, which hold a stator core 60 from inside of a first case 21 in the direction of a rotational center axis line LO in conjunction with a second case 22, are tapered toward the stator core 60. Also, tip parts 240 of second protrusion sections 24, which hold the stator core 60 from inside of the second case 22 in the direction of the rotational center axis line LO in conjunction with the first case 21, are tapered toward the stator core 60. Thus, when the protruding lengths of the first protrusion sections 23 and the second protrusion sections 24 are set somewhat long in advance, the first protrusion sections 23 and the second protrusion sections 24 hold the stator core 60 in a state in which the tip parts 230, 240 are crushed. In this state, when viewed from the axis line direction of a rotor, the first protrusion sections 23 and the second protrusion sections 24 overlap with each other.

## Description

### [Field of the Disclosure]

The disclosure relates to a motor device in which a rotor and a stator are accommodated in a case and a pointer-type display device.

### [Background Art]

In a display device such as a meter device for a vehicle, a structure may be adopted in which rotation of a motor is transmitted to an output shaft through a reduction gear mechanism and a pointer is attached to an end part of the output shaft. In this case, the motor may include a rotor having a cylindrical tube shaped magnet, a stator which is disposed on an outer peripheral side of the rotor, and a case which accommodates the rotor and the stator, and the stator may be structured to include a stator core provided with a plurality of salient poles which are disposed along a peripheral face of the magnet and coils which are wound around two of the salient poles. This type of motor is disclosed in Patent Literature 1.

### [Citation List]

### [Patent Literature]

[PTL 1] Japanese Patent Laid-Open No. 2001-327149

### [Summary of the Disclosure]

### [Technical Problem]

In the motor disclosed in Patent Literature 1, a rotation shaft of a rotor is supported by a shaft hole provided in a case and thereby the rotor is positioned. On the other hand, positioning of a stator is performed so that a support shaft which supports one of gears of a reduction gear mechanism is passed through a hole formed in a stator core and is fixed to the case and, in addition, that a protruded part which is protruded from an outer peripheral edge of the stator core is engaged with a cut-out part which is formed in an edge of the case. In other words, the stator core in Patent Literature 1 is positioned with respect to the case at two positions, i.e., the hole where a shaft of a gear is passed and the protruded part which is protruded from an outer peripheral edge of the stator core.

However, in the structure described in Patent Literature 1, the stator core can be positioned in a direction perpendicular to a rotation center axial line direction of the rotor but, in the rotation center axial line direction of the rotor, the stator core is merely sandwiched between a first case and a second case which structure the case. Therefore, holding of the stator core is easily loosened due to part tolerances of the first case and the second case, temperature change or the like. As a result, the stator core may easily vibrate when an electric current is supplied to the stator.

In view of the problem described above, an objective of the disclosure is to provide a motor device which is capable of suppressing vibration of the stator core, and a pointer-type display device.

### [Solution to Problem]

To achieve the above mentioned objective, the disclosure provides a motor device including a rotor having a magnet, a stator including a stator core having a plurality of salient poles provided in a circumferential direction so as to face a peripheral face of the magnet, a first case which covers the stator from one side in a rotation center axial line direction of the rotor, and a second case which covers the stator from the other side in the rotation center axial line direction of the rotor. The first case is provided with a first protruded part which is protruded toward the stator core and holds the stator core with the second case, and a tip end part of the first protruded part is made thinner toward the stator core from a side of the first case.

In the disclosure, in the first case, a tip end part of the first protruded part which holds the stator core with the second case in the rotation center axial line direction is made thinner toward the stator core and thus, in a case that a protruding dimension of the first protruded part is set to be a little larger, the first protruded part holds the stator core in a state that the tip end part is crushed. Therefore, a situation is hard to be occurred that holding for the stator core becomes loose due to part tolerances and the like. Accordingly, when an electric current is supplied to the stator, the stator core is hard to vibrate.

In the disclosure, it is preferable that the second case is provided with a second protruded part which is protruded toward the stator core and holds the stator core with the first case, and a tip end part of the second protruded part is made thinner toward the stator core from a side of the second case. According to this structure, in the second case, a tip end part of the second protruded part which holds the stator core with the first case in the rotation center axial line direction is made thinner toward the stator core and thus, in a case that a protruding dimension of the second protruded part is set to be a little larger, the second protruded part holds the stator core in a state that the tip end part is crushed. Therefore, a situation is hard to be occurred that holding for the stator core becomes loose due to part tolerances and the like. Accordingly, when an electric current is supplied to the stator, the stator core is hard to vibrate.

In the disclosure, it is preferable that the first protruded part and the second protruded part are overlapped with each other when viewed in the rotation center axial line direction. According to this structure, the stator core can be held by the first protruded part and the second protruded part and thus a situation is hard to be occurred that holding for the stator core becomes loose due to part tolerances and the like. Therefore, when an electric current is supplied to the stator, the stator core is hard to vibrate.

In the disclosure, it is preferable that the first case is provided with a first bottom part facing the stator core and a first side wall which is protruded toward the second case from the first bottom part and is contacted with the second case, and the first protruded part is provided in the first bottom part at a position separated from the first side wall. According to this structure, a part tolerance and the like of the first side wall is hard to affect a portion of the first protruded part which holds the stator core. Therefore, the stator core can be held surely. Further, when an electric current is supplied to the motor, a force applied to the stator core is hard to be transmitted to the first side wall and thus vibration is hard to occur in the contacted portion of the first side wall with the second case. Therefore, generation of abnormal noise due to vibration of the first side wall can be suppressed.

In the disclosure, it is preferable that the second case is provided with a second bottom part facing the stator core and a second side wall which is protruded toward the first case from the second bottom part and is contacted with the first case, and the second protruded part is provided in the second bottom part at a position separated from the second side wall. According to this structure, a part tolerance and the like of the second side wall is hard to affect a portion of the second protruded part which holds the stator core. Therefore, the stator core can be held surely. Further, when an electric current is supplied to the motor, a force applied to the stator core is hard to be transmitted to the second side wall and thus vibration is hard to occur in the contacted portion of the second side wall with the first case. Therefore, generation of abnormal noise due to vibration of the second side wall can be suppressed.

In the disclosure, it may be structured that the stator core is provided with a protruded part which is protruded between the first side wall and the second side wall, and one of the first side wall and the second side wall is formed with a recessed part which is recessed in a direction separated from the stator core in a portion overlapped with the protruded part. According to this structure, part tolerances and the like of the first side wall and the second side wall are hard to affect portions of the first protruded part and the second protruded part which hold the stator core. Therefore, the stator core can be held surely.

In the disclosure, it may be structured that one of the first case and the second case is provided with a hook which is protruded toward the other case, and the other case is provided with an engaging protruded part with which the hook is engaged. Even in a case that this structure is adopted, the stator core is hard to vibrate and thus damage of the hook and the like can be suppressed.

In the disclosure, it is preferable that the first protruded part and the second protruded part are provided at positions separated from the hook. According to this structure, part tolerances and the like of the hook and the engaging protruded part are hard to affect portions of the first protruded part and the second protruded part which hold the stator core. Further, when an electric current is supplied to the motor, a force applied to the stator core is hard to be transmitted to the hook and the engaging protruded part and thus damage of the hook and the like can be suppressed.

In the disclosure, it may be structured that each of the first protruded part and the second protruded part is provided at two positions.

In the disclosure, it is preferable that one of the first case and the second case is provided with a core support part which is capable of supporting the stator core at a position separated from the first protruded part and the second protruded part.

In the disclosure, it is preferable that a portion of a tip end part of the first protruded part which is abutted with the stator core is crushed.

In the disclosure, it is preferable that a portion of a tip end part of the second protruded part which is abutted with the stator core is crushed.

In the disclosure, it is preferable that the recessed part is formed in both of the first side wall and the second side wall, and the protruded part is contacted with a bottom face of the recessed part formed in the first side wall, and the protruded part is not contacted with a bottom face of the recessed part formed in the second side wall.

In the disclosure, it may be structured that the motor device comprises a gear train which is provided between the first case and the second case, and an output member to which rotation of the rotor is transmitted through the gear train.

The motor device in accordance with the disclosure is, for example, used in a pointer-type display device in which a pointer is driven by the output member.

### [Effects of the Disclosure]

In the disclosure, in the first case, a tip end part of the first protruded part which holds the stator core with the second case in the rotation center axial line direction is made thinner toward the stator core and thus, in a case that a protruding dimension of the first protruded part is set to be a little larger, the first protruded part holds the stator core in a state that the tip end part is crushed. Therefore, a situation is hard to be occurred that holding for the stator core becomes loose due to part tolerances and the like. Accordingly, when an electric current is supplied to the stator, the stator core is hard to vibrate.

### [Brief Description of Drawings]

FIG. 1 is an explanatory view showing a pointer-type display device in which a motor device to which the disclosure is applied is used.
FIG. 2 is a cross-sectional view showing the pointer-type display device in FIG. 1.
FIG. 3 is an exploded perspective view showing a motor device to which the disclosure is applied and which is viewed from one side in a rotation center axial line direction.
FIG. 4 is an exploded perspective view showing a motor device to which the disclosure is applied and which is viewed from the other side in the rotation center axial line direction.
FIG. 5 is a bottom view showing a first case and a stator core in FIG. 2.
FIG. 6 is a cross-sectional view schematically showing a state that a stator core is held by a first protruded part provided in a first case and a protruded part provided in a second case shown in FIG. 1.

### [Description of Embodiments]

A motor device to which the disclosure is applied and a pointer-type display device will be described below with reference to the accompanying drawings.

### (Entire Structure)

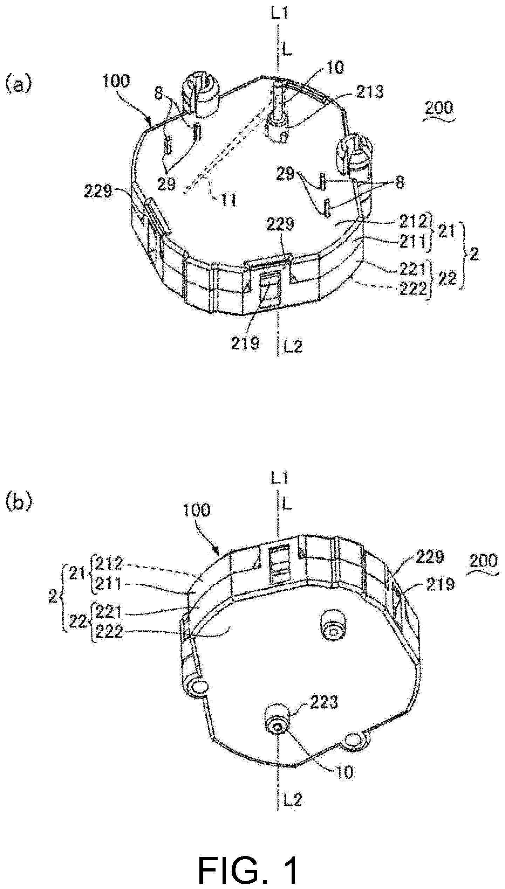

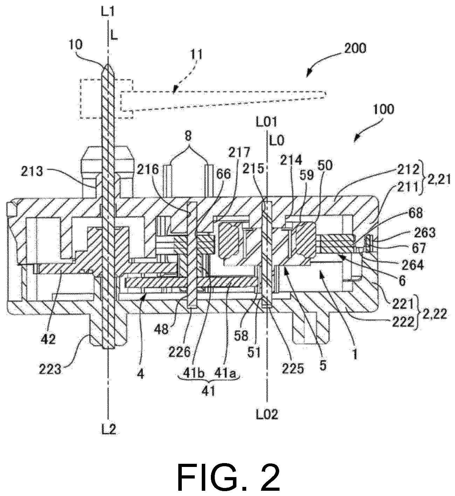

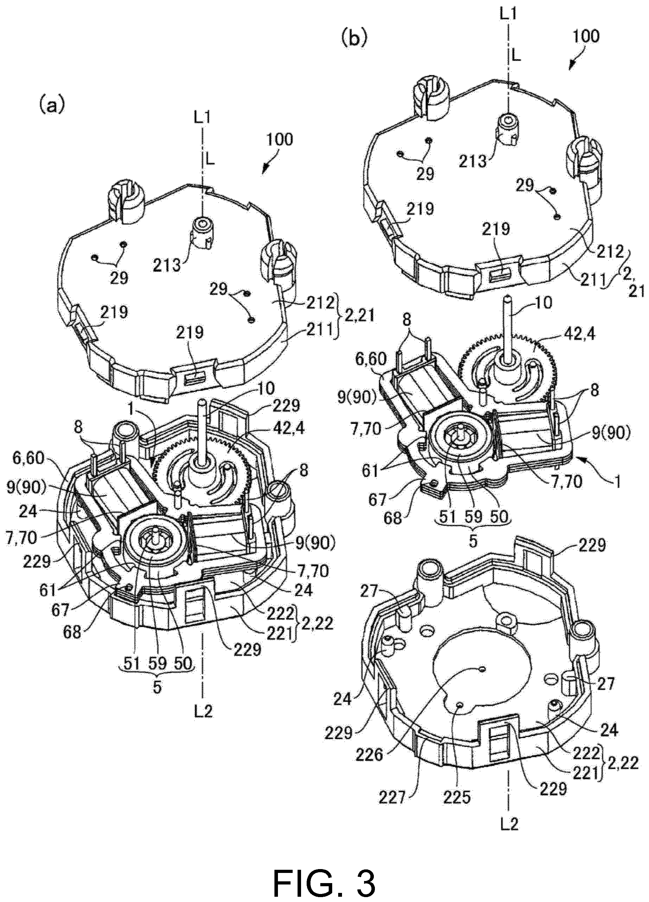

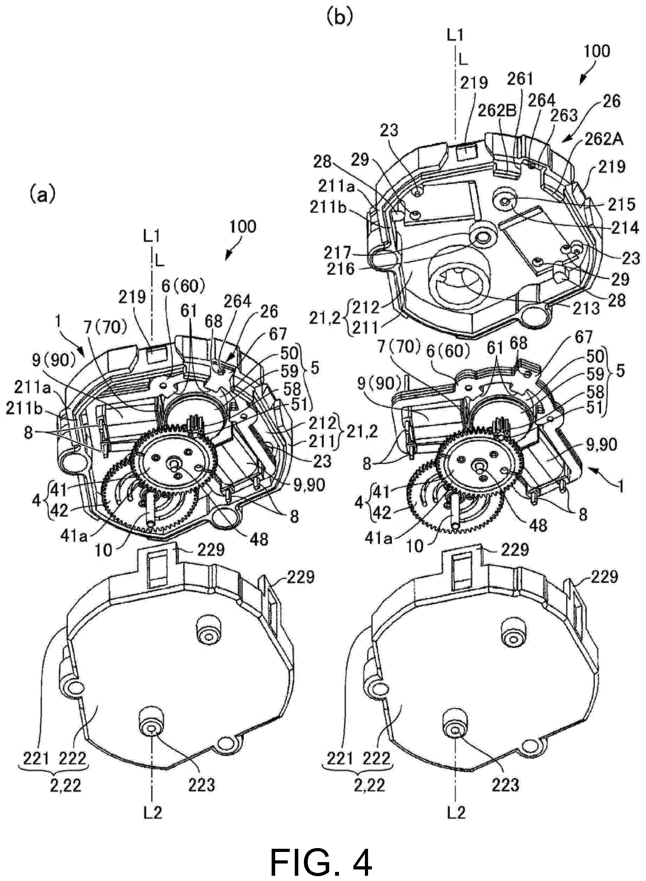

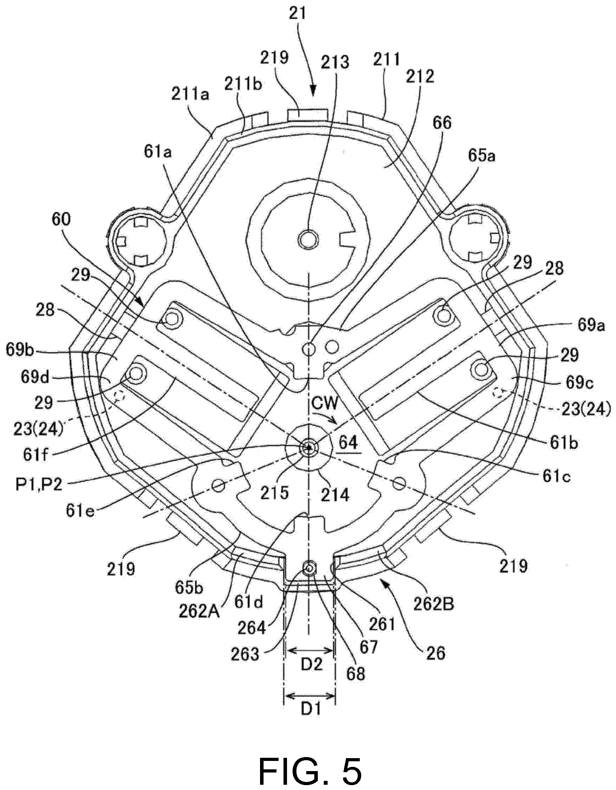

FIG. 1 is an explanatory view showing a pointer-type display device 200 in which a motor device 100 to which the disclosure is applied is used. FIG. 1(a) is a perspective view showing a pointer-type display device 200 which is viewed from one side "L01" in a rotation center axial line "L0" of a rotor 5, and FIG. 1(b) is a perspective view showing the pointer-type display device 200 which is viewed from the other side "L02" in the rotation center axial line "L0" of the rotor 5. FIG. 2 is a cross-sectional view showing the pointer-type display device 200 in FIG. 1. FIG. 3 is an exploded perspective view showing the motor device 100 to which the disclosure is applied and which is viewed from one side "L01" in the rotation center axial line "L0" direction. FIG. 3(a) is an exploded perspective view showing a state that a first case 21 is detached and FIG. 3(b) is an exploded perspective view showing a state that a second case 22 is further detached. FIG. 4 is an exploded perspective view showing the motor device 100 to which the disclosure is applied and which is viewed from the other side "L02" in the rotation center axial line "L0" direction. FIG. 4(a) is an exploded perspective view showing a state that the second case 22 is detached and FIG. 4(b) is an exploded perspective view showing a state that the first case 21 is further detached. FIG. 5 is a bottom view showing the first case 21 and a stator core 60 in FIG. 2.

A motor device 100 shown in FIG. 1 and FIG. 2 is used in a pointer-type display device 200. The pointer-type display device 200 includes the motor device 100 and a pointer 11 which is driven by the motor device 100. The motor device 100 includes a motor 1, a gear train 4 to which rotation of the motor 1 is transmitted, and an output shaft 10 (output member) to which rotation of the gear train 4 is transmitted. A pointer 11 is connected with the output shaft 10 and the pointer 11 is driven by the output shaft 10.

### (Motor)

In FIG. 2, FIG. 3, and FIG. 4, a motor 1 includes a case 2, a rotor 5 which is rotatably supported by the case 2, and a stator 6 disposed around the rotor 5. In the present specification, in a direction where an axial line "L" of the output shaft 10 is extended, a side where the output shaft 10 is protruded from the case 2 is referred to as a first direction "L1", and an opposite side to the side where the output shaft 10 is protruded is referred to as a second direction "L2". Further, a rotation center axial line "L0" of the rotor 5 is parallel to the axial line "L" of the output shaft 10 and thus, one side "L01" of the rotation center axial line "L0" direction of the rotor 5 is directed to the first direction "L1", and the other side "L02" of the rotation center axial line "L0" direction is directed to the second direction "L2".

The case 2 includes a first case 21 which is disposed on the first direction "L1" side in the axial line "L" direction, and a second case 22 which is disposed on the second direction "L2" side in the axial line "L" direction. The first case 21 covers the stator 6 from the first direction "L1" side, and the second case 22 covers the stator 6 from the second direction "L2" side. The first case 21 is provided with a first bottom part 212 in a plate shape to which the rotor 5 and the stator 6 are assembled and a first side wall 211 in a plate shape which is stood up to the second direction "L2" from an outer peripheral edge of the first bottom part 212. The first bottom part 212 is formed with a tube part 213 which supports the output shaft 10. The output shaft 10 is protruded to the first direction "L1" of the axial line "L" direction from the tube part 213, and the pointer 11 is attached to a portion of the output shaft 10 which is protruded from the tube part 213.

The second case 22 is provided with a second bottom part 222 in a plate shape which faces the first bottom part 212 of the first case 21 in the axial line "L" direction, and a second side wall 221 in a plate shape which is stood up to the first direction "L1" from an outer peripheral edge of the second bottom part 222. The first side wall 211 is formed with engaging protruded parts 219 at a plurality of positions, and the second side wall 221 of the second case 22 is formed with hooks 229 at positions corresponding to the engaging protruded parts 219 of the first case 21. When the first case 21 and the second case 22 are connected with each other by engaging the hooks 229 with the engaging protruded parts 219, the case 2 is structured.

The rotor 5 includes a rotation shaft 51 which is rotatably supported by the case 2. The rotor 5 includes a pinion 58 which is fixed to an end part on the second direction "L2" side of the rotation shaft 51 and a magnet 50 in a cylindrical tube shape. An "S"-pole and an "N"-pole are alternately arranged on an outer peripheral face of the magnet 50 with equal angular intervals. In this embodiment, the magnet 50 and the pinion 58 are integrated with each other by insert molding, and the magnet 50 and the pinion 58 are coupled to each other by a circular plate part 59 made of resin. The circular plate part 59 is fixed to the rotation shaft 51.

The first bottom part 212 of the first case 21 is formed with a cylindrical tube part 214 which is protruded to the second direction "L2". The cylindrical tube part 214 is formed with a shaft hole 215 which rotatably supports an end part in the first direction "L1" of the rotation shaft 51 of the rotor 5. On the other hand, the second bottom part 222 of the second case 22 is formed with a shaft hole 225 which rotatably supports an end part in the second direction "L2" of the rotation shaft 51 of the rotor 5.

The gear train 4 decelerates rotation of the rotor 5 and transmits it to the output shaft 10. The gear train 4 is, similarly to the rotor 5 and the stator 6, supported by the case 2. The gear train 4 includes a first gear 41 and a second gear 42. The first gear 41 is provided with a large diameter gear part 41a engaged with the pinion 58 of the rotor 5 and a small diameter gear part 41b engaged with the second gear 42. The output shaft 10 is fixed to the second gear 42 by press fitting or insert molding. The output shaft 10 is rotatably supported by a tube part 213 of the first case 21 and a tube part 223 of the second case 22. The first gear 41 is rotatably supported by a support shaft 48. Both ends of the support shaft 48 are held by a shaft hole 216 formed in the first case 21 and a shaft hole 226 formed in the second case 22. The shaft hole 216 of the first case 21 is formed in a cylindrical tube part 217 which is protruded from the first bottom part 212 to the second direction "L2".

As shown in FIG. 5, the stator 6 includes a stator core 60 which is provided with a plurality of salient poles 61 (salient poles 61a through 61f) facing an outer peripheral face of the magnet 50 through a gap space. In this embodiment, the number of the salient poles 61 is six and, in the magnet 50 shown in FIG. 3 and FIG. 4, four pairs of an "S"-pole and an "N"-pole are formed. Further, the salient poles 61b and 61f (main pole) are disposed on a side of the first gear 41 with respect to the rotation shaft 51 of the rotor 5. Further, as shown in FIG. 3 and FIG. 4, the stator 6 includes coil bobbins 7, which are attached to the salient poles 61b and 61f (main pole) shown in FIG. 5 of the plurality of the salient poles 61, and coils 9 which are wound around the salient poles 61b and 61f through the coil bobbins 7.

The coil bobbin 7 is provided with an insulating bobbin main body 70 around which a coil wire 90 forming the coil 9 is wound and two terminal pins 8 held by the bobbin main body 70. The salient poles 61b and 61f of the stator core 60 are inserted into inner sides of the bobbin main bodies 70 and, as a result, the coils 9 are disposed around the salient poles 61b and 61f. After end parts of the coil wire 90 are bound around end parts on one side of the terminal pins 8 protruded from the bobbin main body 70, the end parts of the coil wire 90 are soldered. The end parts on the other side of the terminal pins 8 are passed through through-holes 29 formed in the first bottom part 212 of the first case 21 and are protruded from the first case 21 to the first direction "L1". The terminal pins 8 protruded from the first case 21 are connected with a wiring member (not shown) such as a wiring board.

In FIG. 5, a portion of the stator core 60 where the rotor 5 is disposed is formed to be an opening part 64, and a plurality of the salient poles 61 is protruded from an inner peripheral edge of the opening part 64 toward the outer peripheral face of the magnet 50. A tip end part on an inner side in a radial direction of the salient pole 61 faces the outer peripheral face of the magnet 50 through a gap space. The stator core 60 is formed so that the salient poles 61b and 61f (main pole) to which the coil bobbins 7 are attached are longer than other salient poles 61a, 61c through 61e (auxiliary pole). Therefore, the stator core 60 is provided with rectangular parts 69a and 69b projected in a substantially rectangular shape to an outer side in the radial direction in portions where the salient poles 61b and 61f (main pole) are formed. The salient poles 61b and 61f are protruded to an inner side in the radial direction from outer peripheral portions of the rectangular parts 69a and 69b. The rectangular parts 69a and 69b are connected with a connecting part 65a on a side of the first gear 41 with respect to the opening part 64. One (salient pole 61a) of the salient poles 61 (auxiliary pole) where the coil 9 is not attached is protruded from the connecting part 65a to an inner side in the radial direction. Further, a connecting part 65b which connects other salient poles 61c through 61e (auxiliary pole) is provided on an opposite side to the first gear 41 with respect to the opening part 64. The salient poles 61c through 61e (auxiliary pole) are protruded to an inner side in the radial direction from the connecting part 65b.

In the motor 1 of the motor device 100 in this embodiment, the magnet 50 is formed with four pairs of an "S"-pole and an "N"-pole at equal angular intervals, and the stator core 60 is formed with six salient poles 61. The salient poles 61 are disposed at unequal intervals, and angular intervals of the salient poles 61 adjacent to each other in a circumferential direction are 56.25°, 56.25°, 67.5°, 67.5°, 56.25° and 56.25° in a clockwise direction "CW" shown in FIG. 5 when the salient pole 61a is the starting point.

As described above, when two salient poles 61f and 61b whose angular positions are displaced from each other by 112.5° in the circumferential direction are utilized as the main poles, in a case that the magnet 50 has eight poles, the salient poles 61b and 61f (main pole) around which the coils 9 are attached are structured so that, when a center in the circumferential direction of one of the main poles is located between an "S"-pole and an "N"-pole, in other words, faces a boundary portion between an "S"-pole and an "N"-pole, a center in the circumferential direction of the other of the main poles faces a center in the circumferential direction of an "S"-pole or a center in the circumferential direction of an "N"-pole. Therefore, sufficient excitation torque can be obtained for rotation of the rotor 5. Further, when respective intervals of the salient poles 61 adjacent to each other in the circumferential direction are set in the above-mentioned values, a variation of detent torque is small. Therefore, according to the motor device 100 in this embodiment, vibration of the rotor 5 is small. Accordingly, noise generated during rotation of the rotor 5 can be reduced and thus a low-noise device can be obtained.

In the motor 1, the motor device 100 and the pointer-type display device 200 structured as described above, when an electric current is supplied to the coils 9 through the terminal pins 8, the rotor 5 is rotated and the rotation is transmitted to the output shaft 10 through the gear train 4. Therefore, the pointer 11 connected with the output shaft 10 is turned. In this case, when a predetermined number of drive pulses is inputted into the coils 9, an angular position of the pointer 11 is changed and, after the pointer 11 is turned to a target position in a clockwise direction, the pointer 11 is stopped. Further, when drive pulses for reverse rotation are supplied, the pointer can be turned to another target position in a counterclockwise direction.

### (Positioning of Stator Core 60 in Direction Perpendicular to Axial Line "L")

The stator core 60 is a plate-shaped member which is structured so that a plurality of magnetic plates punched in the above-mentioned shape is laminated. The stator core 60 is formed with a round hole 66 in the vicinity of a root portion of the salient pole 61a which is located on a side of the gear train 4. The round hole 66 is a hole to which the support shaft 48 passing through a center of the first gear 41 is fitted. Further, the stator core 60 is provided with a protruded part 67 which is protruded to an outer side in the radial direction at a position of the salient pole 61d which is located on an opposite side to the gear train 4. The protruded part 67 is protruded to a position between the first side wall 211 of the first case 21 and the second side wall 221 of the second case 22. An elongated hole 68 is formed in the protruded part 67. The elongated hole 68 is located at a center in the circumferential direction of the protruded part 67. The round hole 66 and the elongated hole 68 are hole parts for positioning the stator core 60.

As described above, the stator core 60 is formed with the opening part 64 in a portion where the rotor 5 is disposed and is provided with the connecting part 65a provided on the side of the first gear 41 with respect to the opening part 64 and the connecting part 65b in a circular arc shape which is provided on the side opposite to the first gear 41 with respect to the opening part 64. The connecting parts 65a and 65b surround the opening part 64 in a ring shape except the portions where the rectangular parts 69a and 69b are formed. The round hole 66 is a circular hole. Further, the shape of the elongated hole 68 is an elongated circular shape in which a direction where the centers of the round hole 66 and the elongated hole 68 are connected with each other is coincided with a major axis direction of the elongated hole 68. The round hole 66 and the elongated hole 68 are formed at angular positions separated from each other by 180 degrees with the point "P1" that the center lines of the salient poles 61a through 61f intersect each other as a reference. Therefore, the major axis direction of the elongated hole 68 is a direction coincided with the radial direction with the point "P1" that the center lines of the salient poles 61a through 61f intersect each other as a reference.

The first case 21 is provided with positioning parts 25 and 26 which position the stator core 60 at two positions (see FIG. 4). The round hole 66 of the stator core 60 is formed at a position corresponding to the positioning part 25, and the protruded part 67 and the elongated hole 68 are formed at a position corresponding to the positioning part 26. As described below, the positioning parts 25 and 26 position the stator core 60 with respect to the first case 21 so that the center of the stator 6 and the rotation center of the rotor 5 are overlapped with each other.

The positioning part 25 is formed in the first bottom part 212. In this embodiment, the shaft hole 216 into which the support shaft 48 of the first gear 41 is press-fitted functions as the positioning part 25. In other words, when the support shaft 48 press-fitted into the shaft hole 216 is passed through the round hole 66 of the stator core 60, the stator core 60 is positioned through the support shaft 48.

The other positioning part 26 is formed in the first side wall 211 of the first case 21. The first side wall 211 is provided with a step part 211a which is formed on an outer peripheral face at a midway position standing up toward the second direction "L2" and an edge part 211b which is stood up to the second direction "L2" from an inner peripheral edge of the step part 211a. The edge part 211b is formed in the entire periphery of the first side wall 211. The positioning part 26 is provided with a cut-out part 261 which is formed by cutting out an edge part 211b at a position corresponding to the protruded part 67 of the stator core 60, a pair of guide parts 262A and 262B which are protruded to the second direction "L2" on both sides in the circumferential direction of the cut-out part 261, a recessed part 263 which is formed in the step part 211a so as to have the same width as the cut-out part 261, and a projecting part 264 which is protruded to the second direction "L2" at a center in the circumferential direction of the recessed part 263. The projecting part 264 is located on an outer peripheral side in the radial direction with respect to the guide parts 262A and 262B. Further, a distance "D1" between the guide parts 262A and 262B is larger than a width "D2" of the protruded part 67, and tip ends of the guide parts 262A and 262B are formed in a chamfered shape. Therefore, side faces in the circumferential direction of the protruded part 67 are not contacted with inner faces in the circumferential direction of the recessed part 263.

In the positioning part 26 structured as described above, when the protruded part 67 of the stator core 60 is fitted into the cut-out part 261 and the protruded part 67 is placed on the recessed part 263, a state is obtained that the projecting part 264 is fitted into the elongated hole 68. The projecting part 264 is formed in a columnar shape, and its diameter is set in a dimension so that the projecting part 264 is movable in the elongated hole 68 in the major axis direction of the elongated hole 68 and is unable to move in the minor axis direction of the elongated hole 68. Therefore, since the projecting part 264 is fitted to the elongated hole 68, turning prevention of the stator core 60 is performed by the positioning part 26 in a turning direction with the support shaft 48 as a center.

In this state, the protruded part 67 of the stator core 60 is located between the first side wall 211 of the first case 21 and the second side wall 221 of the second case 22 in a state that the protruded part 67 is fitted into the recessed part 263 formed in the first side wall 211 of the first case 21. In this embodiment, the second side wall 221 of the second case 22 is formed with a recessed part 227, which is recessed in a direction separated from the protruded part 67 of the stator core 60, at a position overlapping with the protruded part 67. Therefore, although the protruded part 67 of the stator core 60 is contacted with a bottom face of the recessed part 263 in the first side wall 211 of the first case 21, but the protruded part 67 is not contacted with a bottom face of the recessed part 227 of the second case 22.

The positioning parts 25 and 26 structured as described above are provided at angular positions separated from each other by 180 degrees with the center "P2" of the shaft hole 215 to which the rotation shaft 51 of the rotor 5 is fitted as a reference. In other words, a straight line connecting the center of the shaft hole 216 structuring the positioning part 25 with the center of the projecting part 264 provided in the positioning part 26 are arranged so as to pass through the center "P2" of the shaft hole 215. Therefore, the positioning parts 25 and 26 position the stator core 60 at the angular positions separated from each other by 180 degrees with the rotation center of the rotor 5 as a reference. A portion of the stator core 60 where the round hole 66 is formed is positioned by the positioning part 25 through the support shaft 48 and the protruded part 67 where the elongated hole 68 is formed is positioned by the positioning part 26. As a result, the stator core 60 is positioned at the position where the center of the stator 6 (in other words, the point "P1" where the center lines of the salient poles 61a through 61f intersect each other) and the rotation center of the rotor 5 (in other words, the center "P2" of the shaft hole 215 to which the rotation shaft 51 is fitted) are overlapped with each other (see FIG. 5).

### (Holding of Stator Core 60 in Axial Line "L" Direction)

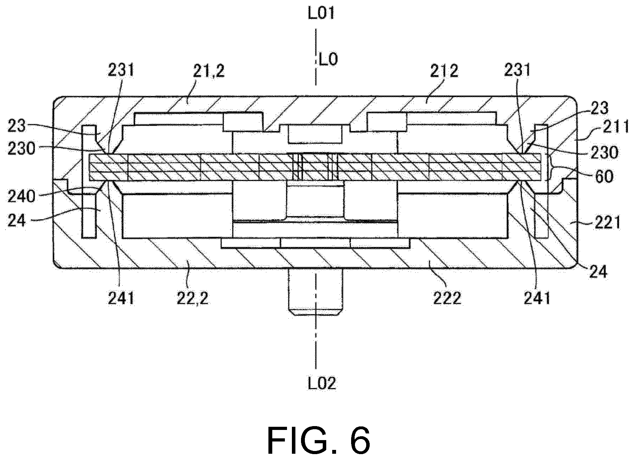

FIG. 6 is a cross-sectional view schematically showing a state that the stator core 60 is held by a first protruded part provided in the first case 21 and a protruded part provided in the second case 22 shown in FIG. 1. Only the first case 21, the second case 22 and the stator core 60 are shown in FIG. 6.

As shown in FIG. 3 and FIG. 4, in this embodiment, in order to hold the stator core 60 in the rotation center axial line "L0" direction, the first case member 21 is provided with a first protruded part 23 which is protruded from the first bottom part 212 toward the stator core 60 so as to hold the stator core 60 with the second case 22. Further, the second case member 22 is provided with a second protruded part 24 which is protruded from the second bottom part 222 toward the stator core 60 so as to hold the stator core 60 with the first case 21. In this embodiment, the first protruded part 23 and the second protruded part 24 are formed in a round bar shape.

In this embodiment, the first protruded part 23 is provided in the first bottom part 212 at a position separated from the first side wall 211 and a space is provided between the first protruded part 23 and the first side wall 211. Further, the first protruded part 23 is provided at an angular position separated from the engaging protruded part 219 when viewed in the rotation center axial line "L0". Further, the second protruded part 24 is provided in the second bottom part 222 at a position separated from the second side wall 221 and a space is provided between the second protruded part 24 and the second side wall 221. Further, the second protruded part 24 is provided at an angular position separated from the hook 229 when viewed in the rotation center axial line "L0".

In this embodiment, each of the first protruded part 23 and the second protruded part 24 is provided at two positions. Further, the first protruded part 23 and the second protruded part 24 are overlapped with each other in the rotation center axial line "L0" direction at each of the two positions when viewed in the rotation center axial line "L0" direction. Therefore, the stator core 60 is held between the first protruded part 23 and the second protruded part 24. In this embodiment, the first protruded part 23 and the second protruded part 24 are, as shown in FIG. 5, provided at a position overlapping with the vicinity of a corner 69c located on a clockwise direction "CW" side of two corners of the rectangular part 69a of the stator core 60. Further, the first protruded part 23 and the second protruded part 24 are provided at a position overlapping with the vicinity of a corner 69d located on an opposite side to the clockwise direction "CW" side of two corners of the rectangular part 69b of the stator core 60.

Further, in this embodiment, as shown in FIG. 6, a tip end part 230 of the first protruded part 23 is made thinner in a circular conical shape from a side of the first case 21 toward the stator core 60. Similarly, a tip end part 240 of the second protruded part 24 is made thinner in a circular conical shape from a side of the second case 22 toward the stator core 60. In this embodiment, the tip end part 230 of the first protruded part 23 and the tip end part 240 of the second protruded part 24 are formed in a circular conical shape. In this case, when the stator core 60 is held between the first protruded part 23 and the second protruded part 24, a portion 231 of the tip end part 230 of the first protruded part 23 abutting with the stator core 60 is crushed, and a portion 241 of the tip end part 240 of the second protruded part 24 abutting with the stator core 60 is also crushed. More specifically, the tip end part 230 of the first protruded part 23 (portion 231 abutting with the stator core 60) and the tip end part 240 of the second protruded part 24 (portion 241 abutting with the stator core 60) are elastically deformed or plastically deformed and crushed. In this case, one or both of the first protruded part 23 and the second protruded part 24 may be abutted with the stator core 60 without being crushed according to protruding dimensions of the first protruded part 23 and the second protruded part 24.

As shown in FIG. 3, FIG. 4 and FIG. 5, one of the first case 21 and the second case 22 is provided with a core support part which is capable of supporting the stator core 60 at a position separated from the first protruded part 23 and the second protruded part 24. In this embodiment, as shown in FIG. 4 and FIG. 5, the first case 21 is formed with core support parts 28 which support the stator core 60 and are protruded from the first bottom part 212 toward the other side "L02" in the rotation center axial line "L0" at positions overlapped with root portions of the salient poles 61b and 61f in the rectangular parts 69a and 69b of the stator core 60. The core support part 28 is connected with an inner face of the first side wall 211. As shown in FIG. 3, in this embodiment, the second case 22 is also formed with core support parts 27 which are capable of supporting the stator core 60 and are protruded from the second bottom part 222 toward one side "L01" in the rotation center axial line "L0" at positions overlapped with root portions of the salient poles 61b and 61f (positions overlapped with the core support parts 28 in the rotation center axial line "L0" direction) in the rectangular parts 69a and 69b of the stator core 60. The core support parts 27 are connected with an inner face of the second side wall 221.

### (Assembling of Motor)

When the motor 1 is to be assembled, first, the support shaft 48 for the first gear 41 is press-fitted to the shaft hole 216 formed in the first case 21. Further, the rotation shaft 51 for the rotor 5 is press-fitted into the shaft hole 215. After that, the stator 6 structured of the stator core 60 to which the coil bobbins 7, the coils 9 and the terminal pins 8 are attached is assembled to the first case 21. In this case, first, a tip end of the support shaft 48 is inserted into the round hole 66 of the stator core 60 and, after that, the protruded part 67 is inserted between a pair of the guide parts 262A and 262B.

Next, when the stator core 60 is brought close to the first bottom part 212 of the first case 21 while guiding the protruded part 67 by the guide parts 262A and 262B, the terminal pins 8 are inserted into four through-holes 29 formed in the first bottom part 212. Further, positioning in the circumferential direction of the stator core 60 is performed by the projecting part 264 fitted to the elongated hole 68.

After the stator 6 is assembled to the first case 21, the rotor 5 is assembled to the first case 21. After that, the output shaft 10 to which the second gear 42 is fixed is attached to the tube part 213 of the first case 21. Next, the first gear 41 is attached to the support shaft 48 so that the first gear 41 is meshed with the pinion 58 and the second gear 42.

Finally, the first case 21 is covered with the second case 22, the hooks 229 are engaged with the engaging protruded parts 219, and thereby the case 2 is structured by joining the first case 21 and the second case 22 to each other. When the first case 21 and the second case 22 are connected with each other, the edge part 211b of the first case 21 and a pair of the guide parts 262A and 262B are fitted to an inner peripheral side of the second side wall 221 of the second case 22. In this state, the protruded part 67 is located between the first side wall 211 of the first case 21 and the second side wall 221 of the second case 22. Even in this case, although the protruded part 67 of the stator core 60 is contacted with the bottom face of the recessed part 263 in the first side wall 211 of the first case 21, the protruded part 67 is not contacted with the bottom face of the recessed part 227 of the second case 22.

Further, when the second case 22 and the first case 21 are joined to each other, the first protruded part 23 and the second protruded part 24 are abutted with the stator core 60 and thus positioning of the stator core 60 in the rotation center axial line "L0" direction is performed. In this case, the portion 231 of the tip end part 230 of the first protruded part 23 which is abutted with the stator core 60 is crushed, and the portion 241 of the tip end part 240 of the second protruded part 24 which is abutted with the stator core 60 is also crushed. More specifically, the tip end part 230 of the first protruded part 23 (portion 231 abutting with the stator core 60) and the tip end part 240 of the second protruded part 24 (portion 241 abutting with the stator core 60) are elastically deformed or plastically deformed and crushed. Further, the first case 21 is formed with the core support part 28 and the second case 22 is formed with the core support part 27. The core support parts 27 and 28 function to prevent the tip end part 230 of the first protruded part 23 and the tip end part 240 of the second protruded part 24 from further being crushed even in a case that the tip end part 230 of the first protruded part 23 and the tip end part 240 of the second protruded part 24 are abutted with the stator core 60 in a crushed state. Therefore, in a state that the first protruded part 23 and the second protruded part 24 are abutted with the stator core 60 and the stator core 60 is positioned in the rotation center axial line "L0" direction, the core support parts 27 and 28 may be abutted with the stator core 60, but one or both of the core support parts 27 and 28 may be separated from the stator core 60.

### (Principal Effects in this Embodiment)

As described above, in the motor device 100 and the pointer-type display device 200 in this embodiment, the tip end part 230 of the first protruded part 23 in the first case 21 which holds the stator core 60 in the rotation center axial line "L0" direction between the first case 21 and the second case 22 is made thinner toward the stator core 60. Therefore, when a protruding dimension of the first protruded part 23 is set to be a little larger, the first protruded part 23 holds the stator core 60 in a state that the tip end part 230 is crushed. Further, the tip end part 240 of the second protruded part 24 in the second case 22 which holds the stator core 60 in the rotation center axial line "L0" direction between the first case 21 and the second case 22 is made thinner toward the stator core 60. Therefore, when a protruding dimension of the second protruded part 24 is set to be a little larger, the second protruded part 24 holds the stator core 60 in a state that the tip end part 240 is crushed. Accordingly, a situation is hard to be occurred that holding for the stator core 60 becomes loose due to a part tolerance and the like. As a result, the stator core 60 is hard to vibrate when an electric current is supplied to the stator 6 and thus generation of abnormal noise can be suppressed. Further, the dimensional tolerance and the like can be absorbed by crushing the tip end parts 230 and 240 and thus a situation that an excessive force is applied to the hooks 229 is hard to be occurred.

Further, the first protruded part 23 and the second protruded part 24 are overlapped with each other when viewed in the rotation center axial line "L0" direction and thus the stator core 60 can be held by the first protruded part 23 and the second protruded part 24 from both sides. Therefore, a situation that holding for the stator core 60 becomes loose due to a part tolerance and the like is further hard to be occurred. Accordingly, the stator core 60 is hard to vibrate when an electric current is supplied to the stator 6 and thus generation of abnormal noise can be suppressed.

Further, the first protruded part 23 is provided at a position separated from the first side wall 211 of the first case 21, and the second protruded part 24 is provided at a position separated from the second side wall 221 of the second case 22. Therefore, portions of the first protruded part 23 and the second protruded part 24 which hold the stator core 60 are hard to be affected by part tolerances and the like of the first side wall 211 and the second side wall 221. Accordingly, the stator core 60 can be held surely. Further, a force applied to the stator core 60 when an electric current is supplied to the motor 1 is hard to be transmitted to the first side wall 211 and the second side wall 221 and thus vibration is hard to be occurred in a contacting portion of the first side wall 211 with the second side wall 221. Therefore, generation of abnormal noise due to vibration of the first side wall 211 and the second side wall 221 can be suppressed.

Further, in the first case 21, the first protruded part 23 is provided at a position separated from the engaging protruded part 219 and, in the second case 22, the second protruded part 24 is provided at a position separated from the hook 229. Therefore, the portions of the first protruded part 23 and the second protruded part 24 which hold the stator core 60 are hard to be affected by part tolerances and the like of the hook 229 and the engaging protruded part 219. Accordingly, the stator core 60 can be held surely. Further, a force applied to the stator core 60 when an electric current is supplied to the motor 1 is hard to be transmitted to the hook 229 and the engaging protruded part 219 and thus damage of the hook 229 and the like can be suppressed.

Further, in the positioning part 26, the protruded part 67 of the stator core 60 is located between the first side wall 211 of the first case 21 and the second side wall 221 of the second case 22 in a state that the protruded part 67 is fitted to the recessed part 263 formed in the first side wall 211 of the first case 21. In this embodiment, the second side wall 221 of the second case 22 is formed with the recessed part 227, which is recessed in a direction separated from the protruded part 67 of the stator core 60, at a position overlapped with the protruded part 67. Therefore, the protruded part 67 of the stator core 60 is contacted with the first side wall 211 of the first case 21 but is not contacted with the second side wall 221 of the second case 22. Accordingly, the portions of the first protruded part 23 and the second protruded part 24 which hold the stator core 60 are hard to be affected due to part tolerances and the like of the first side wall 211 and the second side wall 221 in the positioning part 26. Therefore, the stator core 60 can be held surely.

Further, in the motor device 100 in this embodiment, the positioning parts 25 and 26 are provided in the first case 21, and the stator core 60 is provided with the hole parts (round hole 66 and elongated hole 68) corresponding to the positioning parts 25 and 26. The elongated hole 68 is formed in the protruded part 67 which is protruded to an outer peripheral side from the connecting part 65b of the stator core 60. Therefore, when the projecting part 264 of the positioning part 26 is fitted into the elongated hole 68 with the round hole 66 as a reference, the stator core 60 is positioned. In the positioning structure, positioning can be performed with the centers of the hole parts (round hole 66 and elongated hole 68) as a reference and thus centering of the stator core 60 can be performed with a high degree of accuracy and deviation of the center of the rotor 5 from the center of the stator 6 can be reduced. Therefore, increase of vibration and noise due to deviation of the center of the rotor 5 from the stator 6 can be reduced and variation of the motor characteristics can be reduced.

Further, a major axis direction of the elongated hole 68 corresponding to the positioning part 26 is coincided with a direction connecting the elongated hole 68 with the round hole 66. Therefore, even when an error is generated between a distance between the positioning parts 25 and 26 of the first case 21 (in other words, a center distance between the shaft hole 216 to which the support shaft 48 of the first gear 41 is fitted and the projecting part 264) and a distance between the hole parts of the stator core 60 (in other words, a center distance between the round hole 66 and the elongated hole 68), the error can be absorbed in a range of a dimensional difference between an inner diameter dimension in the major axis direction of the elongated hole 68 and a diameter of the projecting part 264. Accordingly, the stator core 60 can be assembled to the first case 21. Further, a direction where the position of the projecting part 264 is displaced in the elongated hole 68 is coincided with a direction connecting the elongated hole 68 with the round hole 66 and thus turning prevention of the stator core 60 is performed in a turning direction with the support shaft 48, which is fitted to the shaft hole 216 of the first case 21, as a center. Therefore, deviation of the rotor center from the stator center can be reduced.

Further, in this embodiment, the positioning parts 25 and 26 are provided at angular positions separated from each other by 180 degrees with the rotation center of the rotor 5 as a reference and the stator core 60 is positioned at two positions on opposite sides with the rotor 5 as a center. Therefore, centering of the stator core 60 can be performed with a high degree of accuracy and deviation of the center of the rotor 5 from the center of the stator 6 can be reduced.

Further, in this embodiment, the positioning part 26 is formed in the edge part 211b provided in the first side wall 211 of the first case 21. Therefore, the protruded part 67 protruded to an outer peripheral side from the stator core 60 can be positioned. Further, the positioning part 26 is provided with a pair of the guide parts 262A and 262B and thus the protruded part 67 is guided by the guide parts 262A and 262B and is guided into the cut-out part 261. Therefore, work for fitting the projecting part 264 to the elongated hole 68 is easily performed.

Further, in this embodiment, when the stator 6 is to be assembled to the first case 21, before the terminal pins 8 of the stator 6 are fitted to the through-holes 29 of the first case 21, the protruded part 67 is guided by a pair of the guide parts 262A and 262B. In other words, the terminal pins 8 can be guided to the through-holes 29 by the guide parts 262A and 262B and thus work for inserting the terminal pins 8 into the through-holes 29 is easily performed.

Further, in this embodiment, the support shaft 48 which supports the first gear 41 of the gear train 4 is inserted into the round hole 66 and the stator core 60 is positioned with respect to the first case 21 through the support shaft 48. When the stator core 60 is positioned by utilizing the support shaft 48 of the first gear 41 structuring the gear train 4 as described above, the gear train 4 and the stator 6 can be disposed compact. Further, working man-hours at the time of assembling can be reduced.

### (Other Embodiments)

In the embodiment described above, in the first case 21 and the second case 22, the output shaft 10 is protruded from the first case 21. However, the disclosure may be applied to a structure that the output shaft 10 is protruded from the second case 22. In the embodiment described above, each of the first protruded part 23 and the second protruded part 24 is provided at two positions. However, each of the first protruded part 23 and the second protruded part 24 may be provided at one position or three or more positions. In the embodiment described above, the first protruded part 23 and the second protruded part 24 are overlapped with each other. However, the first protruded part 23 and the second protruded part 24 may be structured so as to hold the stator core 60 at positions displaced from each other. In the embodiment described above, both of the first protruded part 23 and the second protruded part 24 are provided, but only the first protruded part 23 may be provided. In the embodiment described above, the core support part 28 is formed in the first case 21 and the core support part 27 is formed in the second case 22. However, only one of the core support parts 27 and 28 may be provided. For example, it may be structured that the first case 21 is provided with the core support part 28 but the second case 22 is provided with no core support part 27. In addition, it may be structured that both of the first case 21 and the second case 22 are provided with no core support part. In the embodiment described above, the first protruded part 23 and the second protruded part 24 are formed so that their root sides are formed in a columnar shape and only their tip end parts 230 and 240 are made thinner in a circular conical shape toward the tip end sides (toward the side of the stator core 60). However, the whole of each of the first protruded part 23 and the second protruded part 24 may be structured so as to be made thinner in a circular conical shape or in a pyramid shape toward the tip end side (toward the side of the stator core 60).

In the embodiment described above, the stator core 60 is positioned at the two positions, i.e., the positioning parts 25 and 26. However, it may be structured that the first case 21 is provided with three or more positioning parts and the stator core 60 is provided with three or more hole parts corresponding to the positioning parts.

In the embodiment described above, the motor device 100 is applied to the pointer-type display device 200 as an example. However, the disclosure may be applied to a device other than the motor device 100 for a pointer-type display device.

### [Reference Signs List]

1 ... motor, 2 ... case, 4 ... gear train, 5 ... rotor, 6 ... stator, 10 ... output shaft (output member), 11 ... pointer, 21 ... first case, 22 ... second case, 23 ... first protruded part, 24 ... second protruded part, 27, 28 ... core support part, 50 ... magnet, 51 ... rotation shaft, 60 ... stator core, 100 ... motor device, 200 ... pointer-type display device, 211 ... first side wall, 212 ... first bottom part, 221 ... second side wall, 222 ... second bottom part, 219 ... engaging protruded part, 229 ... hook, 230 ... tip end part of first protruded part, 240 ... tip end part of second protruded part, "L" ... axial line of output shaft, "L0" ... rotation center axial line of rotor.

## Claims

1. A motor device comprising:
a rotor comprising a magnet;
a stator comprising a stator core having a plurality of salient poles provided in a circumferential direction so as to face a peripheral face of the magnet;
a first case which covers the stator from one side in a rotation center axial line direction of the rotor; and
a second case which covers the stator from other side in the rotation center axial line direction of the rotor;
wherein the first case comprises a first protruded part which is protruded toward the stator core and holds the stator core with the second case; and
wherein a tip end part of the first protruded part is made thinner toward the stator core from a side of the first case.

2. The motor device according to claim 1, wherein
the second case comprises a second protruded part which is protruded toward the stator core and holds the stator core with the first case; and
a tip end part of the second protruded part is made thinner toward the stator core from a side of the second case.

3. The motor device according to claim 2, wherein the first protruded part and the second protruded part are overlapped with each other when viewed in the rotation center axial line direction.

4. The motor device according to claim 3, wherein
the first case comprises a first bottom part facing the stator core and a first side wall which is protruded toward the second case from the first bottom part and is contacted with the second case, and
the first protruded part is provided in the first bottom part at a position separated from the first side wall.

5. The motor device according to claim 4, wherein
the second case comprises a second bottom part facing the stator core and a second side wall which is protruded toward the first case from the second bottom part and is contacted with the first case, and
the second protruded part is provided in the second bottom part at a position separated from the second side wall.

6. The motor device according to claim 5, wherein
the stator core comprises a protruded part which is protruded between the first side wall and the second side wall, and
one of the first side wall and the second side wall is formed with a recessed part which is recessed in a direction separated from the stator core in a portion overlapped with the protruded part.

7. The motor device according to one of claims 2 through 6, wherein
one of the first case and the second case comprises a hook which is protruded toward other case of the first case and the second case, and
the other case comprises an engaging protruded part with which the hook is engaged.

8. The motor device according to claim 7, wherein the first protruded part and the second protruded part are provided at positions separated from the hook.

9. The motor device according to claim 2, wherein each of the first protruded part and the second protruded part is provided at two positions.

10. The motor device according to claim 2, wherein one of the first case and the second case comprises a core support part which is capable of supporting the stator core at a position separated from the first protruded part and the second protruded part.

11. The motor device according to claim 1, wherein a portion of a tip end part of the first protruded part which is abutted with the stator core is crushed.

12. The motor device according to claim 2, wherein a portion of a tip end part of the second protruded part which is abutted with the stator core is crushed.

13. The motor device according to claim 6, wherein
the recessed part is formed in both of the first side wall and the second side wall, and
the protruded part is contacted with a bottom face of the recessed part formed in the first side wall, and the protruded part is not contacted with a bottom face of the recessed part formed in the second side wall.

14. The motor device according to one of claims 1 through 13, further comprising a gear train which is provided between the first case and the second case, and an output member to which rotation of the rotor is transmitted through the gear train.

15. A pointer-type display device comprising:
the motor device defined in claim 14; and
a pointer which is driven by the output member.
